(19) Europäisches Patentamt / European Patent Office / Office européen des brevets

(11) **EP 2 007 832 B1**

(12) **EUROPÄISCHE PATENTSCHRIFT**

(45) Veröffentlichungstag und Bekanntmachung des Hinweises auf die Patenterteilung:
**28.02.2018 Patentblatt 2018/09**

(51) Int Cl.:
*C09C 1/24* [(2006.01)]     *C09C 1/56* [(2006.01)]
*C04B 20/10* [(2006.01)]

(21) Anmeldenummer: **07700233.5**

(22) Anmeldetag: **22.01.2007**

(86) Internationale Anmeldenummer:
**PCT/EP2007/000496**

(87) Internationale Veröffentlichungsnummer:
**WO 2007/118523 (25.10.2007 Gazette 2007/43)**

(54) **SCHWARZPIGMENT-HILFSMITTEL-KOMBINATION MIT EINER VERBESSERTEN FARBSTÄRKE**

BLACK PIGMENT/AUXILIARY COMBINATION HAVING IMPROVED COLOUR STRENGTH

COMBINAISON PIGMENT NOIR/ADJUVANT À POUVOIR COLORANT AMÉLIORÉ

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.04.2006 DE 102006017110**

(43) Veröffentlichungstag der Anmeldung:
**31.12.2008 Patentblatt 2009/01**

(73) Patentinhaber: **LANXESS Deutschland GmbH 50569 Köln (DE)**

(72) Erfinder:
• **FRIEDRICH, Holger**
  **47798 Krefeld (DE)**
• **KISCHKEWITZ, Jürgen**
  **40883 Ratingen (DE)**
• **BÜCHNER, Gerald**
  **47839 Krefeld (DE)**

(56) Entgegenhaltungen:
**EP-A- 1 293 543     EP-A2- 0 802 241
EP-A2- 0 860 476     DE-A1- 19 811 553**

## Beschreibung

Die vorliegende Erfindung betrifft eine Schwarzpigment-Hilfsmittel-Kombination mit einer verbesserten relativen Farbstärke, deren Herstellung und deren Verwendung.

Anorganische Pigmente sind in vielen Bereichen des täglichen Lebens anzutreffen. Sie werden beispielsweise zum Einfärben von Baustoffen wie Beton und Asphalt, Dispersionsfarben, Lacken und Kunststoffen eingesetzt. Während bei anorganischen Buntpigmenten eine möglichst hohe Buntheit und eine möglichst hohe Farbstärke erwünscht ist, werden an anorganische Schwarzpigmente andere Anforderungen gestellt. Da es sich bei Schwarzpigmenten um sogenannte Unbuntpigmente handelt, ist eine hohe Buntheit nicht erwünscht. So driftet beispielsweise die Farbe eines Eisenoxidschwarzpigmentes bei einem zu hohen a*-Wert oder b*-Wert ins Rote beziehungsweise Gelbe ab, so dass das Pigment braun erscheint. Bei Schwarzpigmenten ist also eine hohe Buntheit von Nachteil. Trotzdem ist bei Schwarzpigmenten eine möglichst hohe Farbstärke erwünscht.

Zum Einfärben von Betonwaren werden zu einem großen Teil die Pigmente in pulverförmigem Zustand eingesetzt. Sie haben in gemahlener Form den Vorteil der guten Dispergierbarkeit. Die vollständige homogene Verteilung solcher Pigmentpulver erfolgt im Betonmischer in einer kurzen Zeit - bis zu wenigen Minuten. Der Nachteil dieser feinen Pulver besteht darin, dass sie kein gutes Fließverhalten aufweisen und sich beim Lagern häufig zusammenballen und verklumpen. Die genaue Dosierung wird hierdurch erschwert. Ein weiterer Nachteil einiger Pulver besteht darin, dass sie zum Stauben neigen.

Im Stand der Technik sind zahlreiche Verfahren beschrieben, mit denen die Farbstärke von anorganischen Pigmenten verbessert werden soll, um so einen möglichst optimalen Farbeindruck im Anwendungsmedium zu erhalten.

Sehr häufig werden die Pigmente nach der eigentlichen Synthese noch nachbehandelt. Eine solche Nachbehandlung kann zum Beispiel in einer Temperaturbehandlung bei 400°C bis 800°C bestehen, wie sie in EP 0 396 885 B1 oder EP 0 249 843 B1 für Eisenoxidschwarzpigmente beschrieben ist. Die Temperaturbehandlung findet in schwach oxidierender Atmosphäre statt. Die in EP 0 396 885 B1 offenbarten Beispiele lassen allerdings keinen Rückschluss darauf zu, wie durch den eigentlichen Temperungsschritt die Farbwerte und Farbstärke beeinflusst werden. Außerdem erfolgt das Abkühlen des getemperten Pigments unter Inertgas. Die EP 0 249 843 B1 beschreibt dagegen eine Temperaturbehandlung bei 200°C bis 800°C unter einer nichtoxidierenden, bevorzugt Wasserdampf enthaltenden Atmosphäre für einen Zeitraum von 2 Minuten bis 5 Stunden. Dabei kann die Farbstärke von handelsüblichen Eisenoxidschwarzpigmenten um bis zu 35% zunehmen. Auch das Aufheizen bzw. Abkühlen der Pigmente muß unter Schutzgas erfolgen. Wenn vom getrockneten $Fe_3O_4$-Pigment ausgegangen wird, stellt dieses Verfahren einen zusätzlichen extrem engergieaufwändigen Verfahrensschritt dar. Selbst wenn das Pigment als feuchter Filterkuchen eingesetzt wird, ist dieses Verfahren bei langen Verweilzeiten sehr energieaufwändig und daher aus Umwelt- und Klimaschutzgründen zu vermeiden.

Eine andere Art der Nachbehandlung ist eine nachträgliche Beschichtung der Pigmente. So beschreibt die DE 35 12 124 A1 Eisenoxidrotpigmente mit verbesserten koloristischen Eigenschaften, wobei der ioselektrische Punkt der Pigmente größer als 7, besonders bevorzugt größer als 8 ist. Die gemäß dieser Lehre beschriebenen Pigmente müssen eine Beschichtung aufweisen, die aus farblosen Verbindungen einer oder mehrerer Elemente aus der Gruppe Mg, Zn, Al, La, Y, Zr, Sn, oder Ca besteht. Für die Beschichtung eignen sich schwerlösliche Verbindungen des Mg, Ca, A1 und/oder Zn, die durch Aufsprühen, Aufmahlen und/oder Auffällen in wässriger Phase auf das Pigment aufgebracht werden. Das Verfahren führt zu Eisenoxidrotpigmeten, die in Lacksystemen eine deutlich verbesserte Farbsättigung aufweisen, allerdings ist das Verfahren zur Herstellung dieser Eisenoxidrotpigmente kompliziert und erfordert die ständige Überwachung des isoelektrischen Punktes. Des weiteren bewirkt die Beschichtung eine deutliche Herabsetzung der Farbstärke. In DE 36 32 913 A1 wird dieses Verfahren auch auf andere Eisenoxidfarbpigmente, unter anderem Eisenoxidschwarz, ausgedehnt. Die Nachteile des Verfahrens bleiben jedoch die gleichen.

Die EP 0 634 991 B1 beziehungsweise US 5,401,313 A1 beschreiben oberflächenmodifizierte Partikel sowie ein Verfahren zu deren Herstellung. Die darin offenbarten Partikel sind denen aus DE 35 12 124 A1 bzw. DE 36 32 913 A1 ähnlich. Sie unterscheiden sich nur durch eine zweite Beschichtung mit mindestens einem die Dispersion fördernden Mittel. Als solche werden beispielsweise Ligninsulfonate und Polyacrylate genannt. Grundsätzlich ist die Herstellung derartiger Partikel immer ein mehrstufiger Prozeß und deshalb noch umfangreicher. In einem Beispiel wird auch ein nachbehandeltes Eisenoxidschwarzpigment offenbart, das zum Einfärben eines zementären Systems eingesetzt wird. Die Farbstärke dieses nachbehandelten Eisenoxidpigments wurde gegen einen nicht näher spezifizierten Bezug gemessen, so dass keine konkreten Aussagen über die Veränderung der Farbstärke als Folge der zweifachen Beschichtung gemacht werden können.

Der Staubneigung und der schlechten Dosierbarkeit bei Pigmenten begegnet man heute häufig dadurch, dass diese Pulver vor ihrer Verwendung granuliert werden. Allerdings geht dabei häufig auch ein Teil der Dispergierbarkeit verloren, da die Granulate üblicherweise zur Verbesserung der Transporteigenschaften durch Bindemittel in ihrer Stabilität verstärkt werden. Dadurch sind die Granulate in Betonzubereitungen weniger gut zu dispergieren. Bei den normalen, in der Bauindustrie üblichen kurzen Mischzeiten treten infolge schlechter Pigmentverteilung an der Betonoberfläche Stippen, Streifen oder Farbnester auf. Die im Pigment enthaltene Farbstärke kann sich nicht entfalten, so dass bei gleicher Farbintensität des Betonwerkstückes größere Pigmentmengen aufgewendet werden müssen. Trotz der beschriebenen Vorteile von Pigmentgranulaten ist die Baustoffindustrie zu einem großen Teil bei dem Einsatz trockener Pigmentpulver geblieben.

Im Stand der Technik sind sehr viele Pigmentgranulate oder Verfahren zur Herstellung von Pigmentgranulaten beschrieben, die zum Einfärben von Beton geeignet sind. So beschreibt die DE 36 19 363 A1 ein Verfahren zum Einfärben von Beton, wobei man als Färbemittel Pigmentgranulate einsetzt, die aus einem oder mehreren Pigmenten und einem oder mehreren die Dispergierbarkeit der Pigmente im Beton fördernden Bindemittel(n) bestehen. Als Bindemittel, die in Beton als Dispergierhilfsmittel wirken, werden organische Verbindungen genannt, unter anderem Ligninsulfonat. Die Färbewirkung dieser Granulate im Beton ist in allen offenbarten Beispielen mit der von Pigmentpulvern vergleichbar, sie ist jedenfalls nicht signifikant besser. Nachteilig bei dem beschriebenen Verfahren ist, dass die dispergierfördernden Bindemittel in Betonmischungen als Verflüssiger wirkt. Sie beeinflussen das Wasser-Zement-Verhältnis und wirken sich auf die Betonkonsistenz aus.

Auch mit nichtdispergierfördernden Bindemitteln können Pigmentgranulate hergestellt werden, welche bei der Einarbeitung in Beton eine akzeptable Färbewirkung besitzen. Die WO 01/74735 A1 beschreibt ein Verfahren für die Herstellung von Pigmentgranulaten ausgehend von einer flüssigen Suspension, die getrocknet wird. Die flüssige Suspension enthält mindestens ein Pigment und ein Bindemittel, wobei das Bindemittel eine organische Verbindung ist, die nach der Trocknung oder während der Trocknung durch chemische Reaktion einen unlöslichen Film bildet, wobei der Film keinen dispergierfördernden Effekt im Beton besitzt. Die hergestellten Granulate werden bei der Einarbeitung in Beton meist mit anderen Granulaten, die gemäß der Lehre von DE 36 19 363 A1 hergestellt wurden und dispergierfördernde Bindemittel enthaltenden, verglichen. Dabei wurden keine signifikanten Unterschiede im Einfärbeverhalten festgestellt.

US 6,758,893 B2 beschreibt ein Verfahren zur Herstellung von Extrusionsgranulaten. Im einzigen offenbarten Beispiel werden Eisenoxidgelbgranulate zum Einfärben eines zementären Systems eingesetzt. Obwohl es die Aufgabe der Erfindung war, rasch dispergierbare Granulate herzustellen, ist eine mit Eisenoxidgelbgranulat eingefärbte Zementprobe zwar gelber, aber auch wesentlich farbschwächer als eine mit Eisenoxidgelb-Ausgangspulver eingefärbte Zementprobe. Aus den veröffentlichten ΔL*-Werten kann darauf geschlossen werden, dass die Extrusionsganulate um circa 10% bis 15% farbschwächer sind als das eingesetzte Eisenoxidgelb-Ausgangspulver. Das offenbarte Extrusionsverfahren liefert also nur farbschwache Granulate.

Die US 5,853,476 A1 beziehungsweise EP 1 027 302 B1 beschreiben ein Verfahren zur Einfärbung eines zementartigen Systems mit kompaktierten anorganischen Pigmentganulaten, wobei der färbende Effekt der kompaktierten anorganischen Granulate in dem zementartigen System den Pulverstandard übersteigt. Obwohl in zwei Beispielen die Farbmessung in dem zementären System beschrieben ist, wobei der färbende Effekt der anorganischen kompaktierten Pigmentgranulate und des Pulverstandards mit Hilfe eines Farbmessgerätes erfasst werden, werden keinerlei Daten zu den Farbwerten und Farbstärken offenbart. In den beiden offenbarten Beispielen werden lediglich visuelle Abmusterungen der hergestellten Prüfkörper beschrieben. Die mit den anorganischen kompaktierten Pigmentgranulaten eingefärbten Prüfkörper werden gegenüber dem Pulverstandard im Falle eines kompaktierten Eisenoxidrotgranulates als "röter und heller" beziehungsweise im Falle eines kompaktierten Eisenoxidgelbgranulates als "gelber und heller" beschrieben. Diese Pigmentgranulate sind nach eigenen Angaben farbschwächer als das Ausgangspulver ("heller"). Nachteilig bei dem beschriebenen Herstellungsverfahren für die anorganischen kompaktierten Pigmentgranulate ist außerdem der relativ hohe Anteil eines dispergierenden Mittels von über 3 Gew.-% bezogen auf Pigment, welches gleichzeitig als Bindemittel wirkt. Als dispergierendes Mittel wird bevorzugt Ligninsulfonat eingesetzt. Dieses wirkt in Betonmischungen jedoch als Verflüssiger, beeinflußt das Wasser-Zement-Verhältnis und wirkt sich auf die Betonkonsistenz aus.

In DE 198 11 553 A1 wird ein Verfahren zur Herstellung von Rußgranulaten offenbart, bei dem Ruße mit Hilfsmitteln zwei- oder mehrfach kompaktiert und zu Granulaten zerkleinert werden. Nach dem beschriebenen Verfahren werden nicht nur gut fließfähige Granulate erhalten, sondern die relative Farbstärke dieser Granulate in Beton ist höher als aufgrund der Menge des eingesetzten Ausgangsmaterials in Pulverform zu erwarten wäre. Als Ursache für diese Erscheinung wird ein Aufmahlen des Rußes und ein "Aufbrechen" der Rußstrukturen bei der mehrfachen Kompaktierung vermutet. Dieses Verfahren weist als Nachteil auf, dass es durch die zwei- oder mehrfache Kompaktierung technisch anspruchsvoll ist. Außerdem werden sehr hohe Linienkräfte bei den Kompaktierungen angelegt, dass teilweise eine Vorverdichtung erforderlich ist, da Ruße in der Regel ein sehr niedriges Schüttgewicht aufweisen. Nachteilig bei diesem Verfahren ist auch die hohe Menge an Hilfsmitteln, die notwendig ist, um ausreichend stabile Granulate zu erzeugen. In den offenbarten Beispielen werden bis zu 12.5 Gew.-% an Hilfsmitteln zugesetzt.

Die DE 195 48 418 A1 beschreibt ein Nachtemperungsverfahren für Eisenoxidschwarzgranulate, bei dem das Eisenoxidgranulat bei Temperaturen von 80°C bis 650°C unter leicht reduzierender, inerter oder leicht oxidierender Atmosphäre getempert wird. Die Granulate wurde zuvor durch Verdüsen oder Zerstäuben unter Verwendung von löslichen Phosphaten, Silikaten oder Sulfaten als Bindemittel hergestellt. Die Temperung unter inerten Bedingungen (Stickstoff-Atmosphäre) führt auch bei den Granulaten zu einer erhöhten Farbstärke bei der Einarbeitung in eine angefeuchtete Betondachsteinmischung. Dieses Nachtemperungsverfahren weist den gleichen Nachteil auf, wie er bereits oben bei den Pigmentpulvern beschrieben wurde: Der Nachtemperungsschritt ist extrem engergieaufwändig. Erst muß die Pigmentsuspension durch Verdampfung der Wassers granuliert werden, anschließend folgt ein zweiter Verfahrensschritt bei sehr hohen Temperaturen. Dieses Verfahren ist sehr engergieaufwändig und daher aus Umwelt- und Klimaschutzgründen zu vermeiden. EP1293543A offenbart perlförmige Pigmentrusspräparationen die erhalten werden durch Mischen von Russ und 2-20 % eines Netzmittels und anschliessende Trocknung. Das Granulat wird zur Einfärbung von Beton oder Zement verwendet. EP0860476A2 offenbart Granulate aus Pigmenten mit Hilfsmitteln zur Verwendung zum Einfärben von Baustoffen indem den Baustoffen 0,1 bis 10 Gew-% Granulat bezogen auf Zement zugemischt werden.

Aufgabe der vorliegenden Erfindung war es daher, eine Schwarzpigment-Hilfsmittel-Kombination bereit zu stellen, die im Anwendungsmedium eine verbesserte relative Farbstärke aufweist, und durch ein einfaches Verfahren in einem Schritt unter Verwendung von handelsüblichen organischen Hilfsmitteln hergestellt werden kann. Dabei soll das bzw. die zugesetzten Hilfsmittel zu keiner signifikant erhöhten Buntheit der Schwarzpigment-Hilfsmittel-Kombination in Bezug zum unbehandelten Schwarzpigment führen.

Diese Aufgabe wurde gelöst durch eine Schwarzpigment-Hilfsmittel-Kombination enthaltend ein oder mehrere anorganische Schwarzpigmente und ein oder mehrere organische Hilfsmittel, wie in Anspruch 1 definiert, wobei die Schwarzpigment-Hilfsmittel-Kombination eine relative Farbstärke von $\geq$ 110%, insbesondere $\geq$ 112%, bezogen auf das eingesetzte Schwarzpigment, gemäß dem Baustoff-Farbtest aufweist.

Die Methoden zur Messung der Farbwerte sowie zur Berechnung der relativen Farbstärke sind in den Beispielen angegeben.

Die Schwarzpigment-Hilfsmittel-Kombination setzt als anorganische Schwarzpigmente Eisenoxidschwarz-, Eisen-Mangan-Mischoxide-, Spinellmischphasen-Pigmente, oder Mischungen davon ein. Beispiele für Eisenoxidschwarzpigmente sind Magnetitpigmente ($Fe_3O_4$). Eisen-Mangan-Mischoxide ($(Mn,Fe)_2O_3$) sind auch unter dem Namen Eisenmanganschwarz bekannt. Bei Spinellmischphasenpigmenten handelt es sich in der Regel um Kupfer-Chrom-Spinelle $CuCr_2O_4$, in welchen auch Teile des Chroms durch Eisen ersetzt sein können, zum Beispiel entsprechend der Zusammensetzung $CuFe_{0.5}Cr_{1.5}O_4$. Teile des Chroms können aber auch durch Mangan ersetzt sein, entsprechend der Zusammensetzung $Cu(Cr,Mn)_2O_4$. Alle diese Verbindungen sind unter dem Namen Spinellschwarz bekannt.

Die Schwarzpigment-Hilfsmittel-Kombination setzt als organisches Hilfsmittel teil- oder vollhydrolysierte Polyvinylalkohole, Polyvinylacetate oder Mischpolymerisate mit Vinylacetat wie beispielsweise der Vinnapas®-Serie der Firma Wacker Polymer Systems GmbH & Co. KG, Alkylsulfate, -sulfonate, -phosphate und -phosphonate in Form ihrer Alkalimetallsalze, oder Mischungen davon ein. Teilhydrolysierte Polyvinylalkohole sind theoretisch als ein Mischpolymerisat von Vinylalkohol mit Vinylacetat aufzufassen.

Bei der Schwarzpigment-Hilfsmittel-Kombination werden vorzugsweise die organischen Hilfsmittel in einer Menge von 0,01 Gew.-% bis 20 Gew.-%, bevorzugt von 0,1 Gew.-% bis 5 Gew.-%, gerechnet jeweils als Wirkstoff, bezogen auf das/die anorganische(n) Schwarzpigment(e), zugesetzt. Da die organischen Hilfsmittel oftmals nicht als Feststoff, sondern in Form von Lösungen, Suspensionen oder Emulsionen eingesetzt werden, verstehen sich die obigen Angaben auf den Wirkstoff bezogen.

Die Schwarzpigment-Hilfsmittel-Kombination enthält vorzugsweise weitere die Verarbeitbarkeit fördernde Hilfsmittel. Als weitere die Verarbeitbarkeit fördernde Hilfsmittel im Sinne dieser Erfindung gelten auch Emulgatoren, Netzmittel, Dispergierhilfsmittel, Fließhilfsmittel, Zerfallshilfsmittel oder Granulatbindemittel.

Die Schwarzpigment-Hilfsmittel-Kombination weist vorzugsweise einen Restwassergehalt von unter 5 Gew.-%, bevorzugt unter 3 Gew.-% auf. Dieser kann gegebenenfalls durch eine Nachtrocknung erreicht werden. Die Methode zur Bestimmung des Restwassergehaltes ist in den Beispielen angegeben.

Die Schwarzpigment-Hilfsmittel-Kombination liegt vorzugsweise in Granulatform vor. Unter "Granulat" wird im Kontext der Erfindung jedes Material verstanden, dessen mittlere Korngröße im Vergleich mit den Ausgangsmaterialien durch einen Behandlungsschritt vergrößert worden ist. "Granulat" umfasst daher nicht nur Sprühgranulate und Kompaktierungsgranulate, sondern auch zum Beispiel Produkte einer Nass- oder Feuchtbehandlung mit anschließender Zerkleinerung, und Produkte trockener oder im wesentlichen trockener Verarbeitungsschritte, zum Beispiel trocken hergestellte Granulate, Briketts und dergleichen.

Die Pigment-Hilfsmittel-Kombination liegt vorzugsweise als Perlgranulat vor. Perlgranulate können beispielsweise duch Sprühgranulation (Sprühtrocknung über Scheibe oder Düse) in Gleich- oder Gegenstromverfahren erhalten werden.

Mindestens 85% der granulierten Pigment-Hilfsmittel-Kombination weist vorzugsweise eine Teilchengröße zwischen 60 $\mu$m und 3000 $\mu$m, bevorzugt zwischen 80 $\mu$m und 1500 $\mu$m auf.

Die Pigment-Hilfsmittel-Kombination enthält vorzugsweise zusätzlich Konservierungsstoffe, Entschäumer, Retentionsmittel, Rheologiemodifikatoren, Absetzverhinderer und/oder Duftstoffe.

Die Erfindung umfasst auch ein Verfahren zur Herstellung einer Pigment-Hilfsmittel-Kombination, dadurch gekennzeichnet, dass ein oder mehrere anorganische Schwarzpigmente mit ein oder mehreren organischen Hilfsmitteln gemischt werden und die Mischung gegebenenfalls getrocknet und/oder gemahlen wird.

Ein Vorteil des erfindungsgemäßen Herstellungsverfahren ist, dass das Auffällen einer Nachbehandlungssubstanz oder gar ein mehrstufiges Syntheseverfahren für die Nachbehandlung bei der Herstellung der erfindungsgemäßen Schwarzpigment-Hilfsmittel-Kombination nicht erforderlich ist.

Die Herstellung von Eisenoxidschwarzpigmenten ist in der Literatur beschrieben. Sie sind durch viele Verfahren zugänglich. Eisenoxidschwarzpigmente werden im technischen Maßstab hauptsächlich nach zwei Verfahren hergestellt (Ullmann's Encyclopedia of Industrial Chemistry, Fifth Completely Revised Edition, VCH Verlagsesellschaft mbH, Weinheim, Vol. A20, Seite 297 (1996): dem Fällverfahren, bei dem Eisen(II)-salzlösungen unter Einleiten von Luft bei circa 90 °C in der Nähe des Neutralpunktes mit Alkalien ausgefällt werden, bis das gewünschte Fe(III)/Fe(II)-Verhältnis erreicht ist, und dem Laux-Verfahren, bei dem Nitrobenzol mit metallischem Eisen zu Anilin reduziert wird und welches so gesteuert werden kann, dass Eisenoxidschwarzpigmente entstehen.

Die Herstellung von Eisen-Mangan-Mischoxiden und Spinellmischphasenpigmenten ist in Ullmann's Encyclopedia of Industrial Chemistry, Fifth Completely Revised Edition, VCH Verlagsgesellschaft mbH, Weinheim, Vol. A20, Seite 309 f. (1996) beschrieben.

Die Herstellung der erfindungsgemäßen Schwarzpigment-Hilfsmittel-Kombination kann entweder ausgehend vom trockenen Pigment oder auch in der Nassphase (Suspension oder Paste) erfolgen.

Im ersten Fall werden eines oder mehrere Schwarzpigmente mit einem oder mehreren organischen Hilfsmitteln gemischt und die Mischung gegebenenfalls gemahlen. Für das Vermischen von Pigment und Hilfsmittel können sämtliche, dem Fachmann bekannte Mischer eingesetzt werden. Je nach verwendetem Mischaggregat kann es bei dieser Vorgehensweise unter Umständen noch günstig sein, eine Mühle nachzuschalten, um eine vollständige und homogene Schwarzpigment-Hilfsmittel-Kombination zu erhalten.

Das oder die in Suspension oder Paster vorliegenden anorganischen Schwarzpigmente werden vorzugsweise mit einem oder mehreren organischen Hilfsmitteln gemischt, getrocknet und gegebenenfalls gemahlen. Im Falle der Herstellung über die Nassphase (Suspension oder Paste) kann das oder die Hilfsmittel nach der eigentlichen Pigmentsynthese bei nahezu jedem Verfahrensschritt der Auf- und Weiterverarbeitung des Pigmentes bis zur fertigen Konfektionierung zugesetzt werden, beispielsweise nach der Filtration und Waschung des Pigmentes und vor dessen Trocknung.

Die Schwarzpigmentsuspension oder Paste ist vorzugsweise eine Suspension aus dem Pigmentherstellungsprozeß. Der Zusatz des Hilfsmittels in der Nassphase ist besonders bevorzugt, da in der Suspension die Zugabe und das Untermischen des beziehungsweise der Hilfsmittel(s) problemlos möglich ist.

Die Schwarzpigmentsuspension ist vorzugsweise eine erneute Dispersion von agglomerierten Partikeln. Denkbar ist auch das erneute Dispergieren von bereits agglomerierten Partikeln, um ausgehend von Pigmentpulver gezielt eine Pigmentsuspension für die Umsetzung mit dem oder den organischen Hilfsmittel(n) herzustellen. Anschließend erfolgt eine Trocknung. Für den Trocknungsschritt steht dem Fachmann eine Reihe von Aggregaten zur Verfügung. Es seien an dieser Stelle nur Kanal-, Band-, Etagen-, Walzen-, Trommel-, Röhren-, Schaufeltrockner, oder auch diskontinuierlich arbeitetende Kammer-Horden-Trockner erwähnt. Die Trocknung erfolgt vorzugsweise durch Sprühtrocknung oder Wirbelschichttrocknung. Vorzugsweise werden Sprühtrockner (Zerstäubungstrockner) eingesetzt, die mit Sprühscheiben oder -düsen im Gleich- oder Gegenstromverfahren arbeiten.

Je nach gewähltem Trocknungsaggregat kann es erforderlich sein, dass sich noch ein Mahlschritt anschließt. Vor oder nach der Mahlung kann noch ein zusätzlicher Temperungsschritt durchgeführt werden.

Es ist nicht erfindungswesentlich, ob die Kombination aus Schwarzpigment und Hilfsmittel in Pulverform oder in granulierter Form vorliegt. Wenn die Schwarzpigment-Hilfsmittel-Kombination in granulierter Form hergestellt werden soll, so eignen sich dafür die gängigen Verfahren. Nach dem Stand der Technik kommen als Herstellungsverfahren für Pigmentgranulate Sprühgranulation (Sprühtrocknung über Scheibe oder Düse) im Gleich- oder Gegenstromverfahren, Aufbaugranulation (Mischer, Wirbelschichtgranulator, Teller bzw. Trommel), Kompaktier- oder Extrusionsverfahren in Frage. Natürlich sind auch Kombinationen aus diesen Granulationsverfahren denkbar. Die Wahl des geeigneten Granulationsverfahrens hängt unter anderem davon ab, ob das Hilfsmittel bereits in der Nassphase (Suspension oder Paste) zugesetzt wurde oder zum bereits getrockneten Schwarzpigment. Im ersten Fall bieten sich die Sprühtrocknungs- oder Extrusionsverfahren an, im zweiten Fall das Kompaktierverfahren.

Die Schwarzpigment-Hilfsmittel-Kombination wird vorzugsweise in trockenem und gegebenenfalls gemahlenem Zustand anschließend noch einem Granulationsprozeß unterworfen.

Die Erfindung umfasst auch die Verwendung der Schwarzpigment-Hilfsmittel-Kombination zur Einfärbung von kalk- und/oder zementgebundenen Baustoffen, bevorzugt Beton, Zementmörtel, Putz und Kalksandstein oder auch zum Einfärben von Asphalt. Prinzipiell ist die erfindungsgemäß hergestellte Pigment-Hilfsmittel-Kombination aber auch zum Einfärben von Lacken, Dispersionsfarben und Kunststoffen geeignet.

Die Schwarzpigment-Hilfsmittel-Kombination wird vorzugsweise mit den Baustoffen in einer Menge von 0,1 bis 10 Gew.-%, bezogen auf Zement, oder bei Asphalt bezogen auf das gesamte Mischgut, vermischt.

Die Schwarzpigment-Hilfsmittel-Kombination wird vorzugsweise erst in Wasser suspendiert und anschließend mit den Baustoffen vermischt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne dass dadurch eine Einschränkung der Erfindung bewirkt werden soll. Die gemachten Mengenangaben in Gew.-% beziehen sich jeweils auf das eingesetzte Pigment.

### Beispiele

### I. Beschreibung der verwendeten Messmethoden

### I.1 Baustoff-Farbtest

Die Prüfung der Farbwerte in Baustoffen erfolgte in Zementmörtel über die farbmetrische Messung von mit Weißzement hergestellten Prismen bei folgenden Daten (in Anlehnung an DIN EN 12878: 2005, Kap. 5.12):

Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 51-Mischschüssel, Bauform 1551, Drehzahl 140 U/min, Ansatz: 1200 g Quarzsand 0,1 bis 1 mm, 600 g Quarzsand 1 bis 2 mm, 200 g Kalksteinmehl (< 5 % Siebrückstand auf 90 $\mu$m-Sieb), 500 g Weißzement. Die Quarzsandfraktionen und das Kalksteinmehl werden zusammen im Mischbehälter vorgelegt. Anschließend wird das Pigment zugegeben und 10 s vorgemischt (Mischer Stufe 1: langsam). Zu dieser Mischung wird nun das Wasser gegeben, wobei darauf zu achten ist, dass es in die Mitte der Mischung eingebracht wird. Nach dem Versickern wird der Zement zugesetzt und gemischt (Mischer Stufe 1: langsam). Nach 100 s Mischzeit wird eine Probe (600 g) entnommen und daraus ein Probekörper (10 x 10 x 2,5 cm) unter Druck hergestellt (Preßkraft 114 kN für 2 Sekunden). Härtung der Probekörper zum fertigen Stein: 24 Stunden bei 30°C und 95 % relative Luftfeuchte mit anschließendem Trocknen von 4 Stunden bei 60°C. Farbdatenmessung über Dataflash 2000 Datacolor International, 4 Meßpunkte je Stein (Meßgeometrie d/8°, Lichtart C/2° mit Glanzeinschluss). Die erhaltenen Mittelwerte werden verglichen mit den Werten einer Referenzprobe (Bezug). Beurteilt werden der Buntheitsabstand $\Delta C_{ab}^*$ und die relative Farbstärke (Referenzprobe = 100 %) (DIN 5033, DIN 6174). Weist die Referenzprobe einen Normfarbwert (Helligkeit) Y < 10 auf, entsprechend einem absoluten L\*-Wert von < 37,84, berechnet gemäß der Formel

$$L^* = 116 \cdot (Y/100)^{1/3} - 16 \qquad ,$$

so sind die hergestellten Prüfkörper zu verwerfen und die Vorschrift des Baustoff-Farbtestes ist dahingehend zu modifizieren, dass die Pigmentierungshöhe auf 0,6%, bezogen auf Zement, halbiert wird.

Im Sinne dieser Anmeldung werden die folgenden farbmetrischen Abkürzungen und Berechnungen verwendet, wie sie aus dem CIELAB-System bekannt sind:

- a\* entspricht der Rot-Grün-Achse mit $\Delta a^* = a^*$ (Probe) - a\* (Bezug)
- b\* entspricht der Gelb-Blau-Achse mit $\Delta b^* = b^*$ (Probe) - b\* (Bezug)
- $C_{ab}^*$ entspricht der Buntheit, wobei $(C_{ab}^*)^2 = (a^*)^2 + (b^*)^2$
- $\Delta C_{ab}^*$ entspricht dem Buntheitsabstand mit $\Delta C_{ab}^* = C_{ab}^*$ (Probe) - $C_{ab}^*$ (Bezug)
- L\* entspricht der Helligkeit mit $\Delta L^* = L^*$ (Probe) - L\* (Bezug)
- $\Delta E_{ab}^*$ entspricht dem Gesamtfarbabstand, wobei $(\Delta E_{ab}^*)^2 = (\Delta L^*)^2 + (\Delta a^*)^2 + (\Delta b^*)^2$.

### I.2 Relative Farbstärke

Für die relative Farbstärke in % gelten folgende Gleichungen:

$$\text{Relative Farbstärke in \%} = \frac{(K/S)_{Probe}}{(K/S)_{Bezug}} \cdot 100$$

$$K/S = \frac{(1 - \beta^*)^2}{2 \cdot \beta^*}$$

$$\beta^* = \frac{Y/100 - r_0}{1 - r_0 - r_2 \cdot (1 - Y/100)} \, ,$$

wobei $r_0 = 0{,}04$ und $r_2 = 0{,}6$ und Y der Normfarbwert (Helligkeit) ist.

Die Berechnung erfolgt in Anlehnung an DIN 53 234.

### I.3 Schüttgewicht

Das Schüttgewicht wird am Fertiggut ohne weitere Behandlung des Produktes durch das Verhältnis aus Masse und Volumen bestimmt.

### I.4 Restfeuchte

Die Restfeuchte wurde durch schonende Trocknung der Pigment-Hilfsmittel-Kombination bis zur Gewichtskonstanz bestimmt.

### I.6 Erstarrungsverhalten

Das Erstarrungsverhalten wurde in Anlehnung an DIN EN 196-3 bestimmt. Dabei wird der Erstarrungsbeginn und das Erstarrungsende eines Zementleims mit und ohne Pigmentierung mit einander verglichen, wobei die Abweichungen nicht größer sein dürfen als in der EN 12878 vorgegeben.

### I.7 Druckfestigkeit

Die Druckfestigkeit wurde in Anlehnung an DIN EN 196-1 bestimmt. Geprüft wird dabei die Druckfestigkeit von pigmentiertem Zementmörtel im Vergleich zur einer unpigmentierten Probe, wobei die Abweichungen nicht größer sein dürfen als in der EN 12878 "Pigmente zum Einfärben von kalk- und/oder zementgebundenen Baustoffen" vorgegeben (maximal -8 % für bewehrten Beton).

### II. Beispiel 1 (nicht erfindungsgemäß)

3 kg Eisenoxidschwarz Bayferrox® 360 (Handelsprodukt der Lanxess Deutschland GmbH) wurden in einem Mischer mit

a) 2,5 Gew.-% neomere® TINT 317 (Handelsprodukt der Chryso, SAS) beziehungsweise
b) 3,0 Gew.-% neomere® TINT 308 und 3,0 Gew.-% einer 25%igen wässrigen Lösung eines teilhydrolysierten Polyvinylalkohols mit niedrigem Molekulargewicht

intensiv gemischt und anschließend über eine Bauermeistermühle mit 3 mm Siebeinsatz homogenisiert. Die erhaltenen Produkte wurden wie oben beschrieben gemäß dem Baustoff-Farbtest mit 100 s Mischzeit eingearbeitet. Die hergestellten Steine waren homogen eingefärbt und ergaben bei der Farbmessung eine relative Farbstärke von 129% beziehungsweise 135%. Als Bezug diente der ebenfalls homogen eingefärbte Stein aus Bayferrox® 360-Ausgangsmaterial ohne Zusätze, welches ebenfalls über die Bauermeistermühle mit 3 mm-Siebeinsatz gemahlen worden war. Die Schwarzpigment-Hilfsmittel-Kombinationen sind also wesentlich farbstärker als das Ausgangsmaterial. Weitere Details sind in Tabelle 1 zusammengefasst.

### III. Beispiel 2 (nicht erfindungsgemäß)

40 kg Bayferrox® 360 wurden in 26,7 kg Wasser und mit

a) 1,5 Gew.-% einer 40%igen wässrigen Lösung von Natrium-Polyacrylat und 2,0 Gew.-% einer 25%igen wässrigen Lösung eines teilhydrolysierten Polyvinylalkohols mit niedrigem Molekulargewicht beziehungsweise

b) 1,5 Gew.-% neomere® TINT 317 und 2,0 Gew.-% einer 25%igen wässrigen Lösung eines teilhydrolysierten Polyvinylalkohols mit niedrigem Molekulargewicht

suspendiert. Die Suspensionen wiesen einen Feststoffgehalt von 59% beziehungsweise 57% und einen pH-Wert von 9,1 beziehungsweise 8,8 auf und wurden auf einem Düsensprühtrockner getrocknet. Die erhaltenen Granulate sind rieselfähig und wurden wie oben beschrieben gemäß dem Baustoff-Farbtest mit 100 s Mischzeit eingearbeitet. Die hergestellten Steine waren homogen eingefärbt und ergaben bei der Farbmessung eine relative Farbstärke von 120% beziehungsweise 127%. Als Bezug diente der ebenfalls homogen eingefärbte Stein aus Bayferrox® 360-Ausgangsmaterial ohne Zusätze. Die Schwarzpigment-Hilfsmittel-Kombinationen sind wesentlich farbstärker als das Ausgangsmaterial. Weitere Details sind in Tabelle 1 zusammengefasst.

### IV. Beispiel 3 (Vergleichsbeispiel)

40 kg Bayferrox® 360 wurden in 26,7 kg Wasser und mit 2,5 Gew.-% einer 40%igen wässrigen Lösung von Natrium-Polyacrylat suspendiert. Die Suspension wies einen Feststoffgehalt von 59% und einen pH-Wert von 8,6 auf und wurde auf einem Düsensprühtrockner getrocknet. Das erhaltene Granulat ist rieselfähig und wurde wie oben beschrieben gemäß dem Baustoff-Farbtest mit 100 s Mischzeit eingearbeitet. Der hergestellte Stein war homogen eingefärbt und ergab bei der Farbmessung eine relative Farbstärke von 99%. Als Bezug diente der ebenfalls homogen eingefärbte Stein aus Bayferrox® 360-Ausgangsmaterial ohne Zusätze. Das Vergleichsgranulat ist genauso farbstark wie das Ausgangsmaterial. Weitere Details sind in Tabelle 1 zusammengefasst.

### V. Beispiel 4 (Vergleichsbeispiel)

25 kg Bayferrox® 360 wurden in 21,2 kg Wasser und mit 3,77 Gew.-% AmmoniumLigninsulfonat suspendiert. Die Suspension wies einen Feststoffgehalt von 54,0% und einen pH-Wert von 5,3 auf und wurde auf einem Düsensprühtrockner getrocknet. Das erhaltene Granulat ist rieselfähig und wurde wie oben beschrieben gemäß dem Baustoff-Farbtest mit 100 s Mischzeit eingearbeitet. Der hergestellte Stein war homogen eingefärbt und ergab bei der Farbmessung eine relative Farbstärke von 105%. Als Bezug diente der ebenfalls homogen eingefärbte Prüfkörper aus Bayferrox® 360-Ausgangsmaterial ohne Zusätze. Das Vergleichsgranulat ist nur geringfügig farbstärker als das Ausgangsmaterial. Weitere Details sind in Tabelle 1 zusammengefasst.

### VI. Beispiel 5 (nicht erfindungsgemäß)

3 kg Eisen-Mangan-Mischoxid Bayferrox® 303T (Handelsprodukt der Lanxess Deutschland GmbH) wurden in einem Mischer mit 1,5 Gew.-% neomere® TINT 305 und 1,5 Gew.-% einer 25%igen wässrigen Lösung eines teilyhydrolysierten Polyvinylalkohols mit niedrigem Molekulargewicht in einem Mischer intensiv gemischt und anschließend über eine Bauermeistermühle mit 3 mm Siebeinsatz homogenisiert. Das erhaltene Produkt wurde wie oben gemäß dem Baustoff-Farbtest mit 100 s Mischzeit eingearbeitet. Der hergestellte Stein war homogen eingefärbt und ergab bei der Farbmessung eine relative Farbstärke von 112%. Als Bezug diente der ebenfalls homogen eingefärbte Stein aus Bayferrox® 303T-Ausgangsmaterial ohne Zusätze, welches ebenfalls über die Bauermeistermühle mit 3 mm-Siebeinsatz gemahlen worden war. Die Schwarzpigment-Hilfsmittel-Kombination ist also wesentlich farbstärker als das Ausgangsmaterial. Weitere Details sind in Tabelle 1 zusammengefasst.

### VII. Beispiel 6

25 kg Eisen-Mangan-Mischoxid Bayferrox® 303T wurden in 18,5 kg Wasser und mit 3,0 Gew.-% einer 25%igen wässrigen Lösung eines teilhydrolysierten Polyvinylalkohols mit niedrigem Molekulargewicht suspendiert. Die Suspension wies einen Feststoffgehalt von 55% und einen pH-Wert von 8,2 auf und wurde auf einem Düsensprühtrockner getrocknet. Das erhaltene Granulat ist rieselfähig und wurde wie oben beschrieben gemäß dem Baustoff-Farbtest mit 100 s Mischzeit eingearbeitet. Der hergestellte Stein war homogen eingefärbt und ergab bei der Farbmessung eine relative Farbstärke von 123%. Als Bezug diente der ebenfalls homogen eingefärbte Stein aus Bayferrox® 303T-Ausgangsmaterial ohne Zusätze. Die Schwarzpigment-Hilfsmittel-Kombination ist also wesentlich farbstärker als das Ausgangsmaterial. Weitere Details sind in Tabelle 1 zusammengefasst.

**VIII. Beispiel 7** (nicht erfindungsgemäß)

2 kg Kupfer-Chrom-Spinell Heucodur-Schwarz® 963 (Handelsprodukt der Heubach GmbH) wurden in einem Mischer mit

a) 2,5 Gew.-% neomere® TINT 317 beziehungsweise
b) 2,5 Gew.-% neomere® TINT 305

intensiv gemischt und anschließend über eine Bauermeistermühle mit 3 mm Siebeinsatz homogenisiert. Die erhaltenen Produkte wurden wie oben beschrieben gemäß dem Baustoff-Farbtest mit 100 s Mischzeit eingearbeitet. Die hergestellten Steine waren homogen eingefärbt und ergaben bei der Farbmessung eine relative Farbstärke von 142% beziehungsweise 135%. Als Bezug diente der ebenfalls homogen eingefärbte Stein aus Heucodur-Schwarz® 963-Ausgangsmaterial ohne Zusätze, welches ebenfalls über die Bauermeistermühle mit 3 mm-Siebeinsatz gemahlen worden war. Die Schwarzpigment-Hilfsmittel-Kombinationen sind also wesentlich farbstärker als das Ausgangsmaterial. Weitere Details sind in Tabelle 1 zusammengefasst.

**IX. Beispiel 8** (nicht erfindungsgemäß)

20 kg Kupfer-Chrom-Spinell Heucodur-Schwarz® 963 wurden in 20 kg Wasser und mit

a) 1,5 Gew.-% neomere® TINT 317 und 2,0 Gew.-% einer 25%igen wässrigen Lösung eines teilhydrolysierten Polyvinylalkohols mit niedrigem Molekulargewicht
b) 1,5 Gew.-% neomere® TINT 305 und 2,0 Gew.-% einer 20%igen wässrigen Lösung eines teilhydrolysierten Polyvinylalkohols mit höherem Molekulargewicht

suspendiert. Die Suspensionen wiesen einen Feststoffgehalt von 50% und einen pH-Wert von 6,9 beziehungsweise 5,5 auf und wurden auf einem Düsensprühtrockner getrocknet. Die erhaltenen Granulate sind rieselfähig und wurden wie oben beschrieben gemäß dem Baustoff-Farbtest mit 100 s Mischzeit eingearbeitet. Die hergestellten Steine waren homogen eingefärbt und ergaben bei der Farbmessung eine relative Farbstärke von 134% beziehungsweise 126%. Als Bezug diente der ebenfalls homogen eingefärbte Stein aus Heucodur-Schwarz® 963-Ausgangsmaterial ohne Zusätze. Die Schwarzpigment-Hilfsmittel-Kombinationen ist wesentlich farbstärker als das Ausgangsmaterial. Weitere Details sind in Tabelle 1 zusammengefasst.

**X. Beispiel 9** (nicht erfindungsgemäß)

1,8 kg Eisenoxidschwarz Bayferrox® 360 und 0,2 kg Kohlenstoffpigment (Ruß) Corax® N 660 (Handelsprodukt der Degussa AG) wurden in einem Mischer intensiv gemischt. Dann wurden

a) 5,0 Gew.-% einer 20%igen wässrigen Lösung eines teilhydrolysierten Polyvinylalkohols mit höherem Molekulargewicht beziehungsweise
b) 2,0 Gew.-% neomere® TINT 308 und 2,0 Gew.-% einer 25%igen wässrigen Lösung eines teilhydrolysierten Polyvinylalkohols mit niedrigem Molekulargewicht

zugesetzt und erneut intensiv gemischt. Die erhaltenen Produkte wurden wie oben beschrieben gemäß dem Baustoff-Farbtest mit 100 s. Mischzeit eingearbeitet. Die hergestellten Steine waren homogen eingefärbt und ergaben bei der Farbmessung eine relative Farbstärke von 131% beziehungsweise 140%. Als Bezug diente der ebenfalls homogen eingefärbte Stein aus der Bayferrox® 360/Corax® N 660-Mischung ohne Zusätze. Die Schwarzpigment-Hilfsmittel-Kombinationen sind also wesentlich farbstärker als die Ausgangsmischung. Weitere Details sind in Tabelle 1 zusammengefasst.

Tabelle 1

| Beispiel | 1a | 1b | 2a | 2b | 3 (VB) | 4 (VB) | 5 | 6 | 7a | 7b | 8a | 8b | 9a | 9b |
|---|---|---|---|---|---|---|---|---|---|---|---|---|---|---|
| $\Delta a^*$ | 0,0 | 0,2 | 0,1 | 0,2 | 0,0 | 0,0 | 0,0 | 0,1 | 0,3 | 0,2 | 0,2 | 0,1 | 0,1 | 0,1 |
| $\Delta b^*$ | -0,2 | 0,6 | 0,2 | 0,4 | 0,0 | 0,4 | 0,2 | 0,2 | 0,1 | 0,1 | 0,1 | 0,2 | 0,6 | 0,4 |
| $\Delta L^*$ | -2,6 | -3,1 | -2,0 | -2,5 | 0,4 | -0,5 | -1,3 | -2,4 | -4,0 | -3,6 | -3,3 | -2,6 | -2,6 | -3,3 |
| $\Delta C_{ab}^*$ | 0,1 | -0,1 | -0,1 | -0,2 | 0,0 | -0,3 | -0,1 | 0,0 | -0,3 | -0,1 | -0,2 | -0,2 | -0,4 | -0,3 |
| $\Delta E_{ab}^*$ | 2,6 | 3,1 | 2,0 | 2,6 | 0,4 | 0,6 | 1,3 | 2,4 | 4,0 | 3,6 | 3,3 | 2,6 | 2,7 | 3,3 |
| Relative Farbstärke (%) | 129 | 135 | 121 | 127 | 97 | 105 | 112 | 123 | 142 | 137 | 134 | 126 | 131 | 140 |
| Schüttgewicht (g/cm³) | 0,53 | 0,56 | 1,35 | 1,42 | 1,46 | 1,04 | 0,64 | 1,12 | 0,66 | 0,63 | 0,95 | 0,92 | 0,46 | 0,46 |
| Restfeuchte (Gew.-%) | 0,4 | 1,7 | 0,4 | 0,4 | 0,6 | 0,4 | 0,4 | 0,5. | 0,2 | 0,2 | 0,3 | 0,2 | 1,4 | 0,9 |
| Erstarrungsverhalten | erfüllt | erfüllt | erfüllt | erfüllt | erfüllt | nicht erfüllt | erfüllt | erfüllt | erfüllt | erfüllt | erfüllt | erfüllt | erfüllt | erfüllt |
| Druckfestigkeit | n.b. | n.b. | n.b. | n.b. | n.b. | nicht erfüllt | erfüllt | erfüllt | n.b. | n.b. | erfüllt | erfüllt | erfüllt | erfüllt |
| pH-Wert (Suspension) | --- | --- | 9,0 | 8,8 | 8,6 | 5,3 | --- | 8,2 | --- | --- | 6,9 | 5,5 | --- | --- |

"n.b." in Tabelle 1 bedeutet "nicht bestimmt".

**Patentansprüche**

1. Schwarzpigment-Hilfsmittel-Kombination im Wesentlichen bestehend aus einem oder mehreren anorganischen Schwarzpigmenten aus der Gruppe bestehend aus Eisenoxidschwarz-, Eisen-Mangan-Mischoxide- oder Spinellmischphasenpigmenten und einem oder mehreren organischen Hilfsmitteln, wobei die Schwarzpigment-Hilfsmittel-Kombination eine relative Farbstärke von $\geq$ 110%, insbesondere $\geq$ 112%, bezogen auf das eingesetzte Schwarzpigment, gemäß dem Baustoff-Farbtest aufweist, **dadurch gekennzeichnet, dass** organische Hilfsmittel aus der Gruppe bestehend aus teil- oder vollhydrolysierten Polyvinylalkoholen, Polyvinylacetaten oder Mischpolymerisaten mit Vinylacetat, Alkylsulfaten, -sulfonaten, -phosphaten und -phosphonaten in Form ihrer Alkalimetallsalze, oder Mischungen davon, eingesetzt werden.

2. Schwarzpigment-Hilfsmittel-Kombination gemäß Anspruch 1, **dadurch gekennzeichnet, dass** die organischen Hilfsmittel in eine Menge von 0,01 Gew.-% bis 20 Gew.-%, insbesondere von 0,1 Gew.-% bis 5 Gew.-%, gerechnet jeweils als Wirkstoff bezogen auf das/die anorganische(n) Schwarzpigment(e), zugesetzt werden.

3. Schwarzpigment-Hilfsmittel-Kombination gemäß einem oder mehreren der Ansprüche 1 bis 2, **dadurch gekennzeichnet, dass** die Schwarzpigment-Hilfsmittel-Kombination einen Restwassergehalt von unter 5 Gew.-%, insbesondere unter 3 Gew.-% aufweist.

4. Schwarzpigment-Hilfsmittel-Kombination gemäß einem oder mehreren der Ansprüche 1 bis 3, **dadurch gekennzeichnet, dass** die Schwarzpigment-Hilfsmittel-Kombination in Granulatform vorliegt.

5. Schwarzpigment-Hilfsmittel-Kombination gemäß Anspruch 4, **dadurch gekennzeichnet, dass** die Schwarzpigment-Hilfsmittel-Kombination als Perlgranulat vorliegt.

6. Schwarzpigment-Hilfsmittel-Kombination gemäß Anspruch 4 oder 5, **dadurch gekennzeichnet, dass** mindestens 85% der granulierten Schwarzpigment-Hilfsmittel-Kombination eine Teilchengröße zwischen 60 $\mu$m und 3000 $\mu$m, insbesondere zwischen 80 $\mu$m und 1500 $\mu$m, aufweist.

7. Verfahren zur Herstellung einer Schwarzpigment-Hilfsmittel-Kombination nach einem oder mehreren der Ansprüche 1 bis 6, **dadurch gekennzeichnet, dass** ein oder mehrere anorganische Schwarzpigmente mit ein oder mehreren organischen Hilfsmitteln gemischt werden und die Mischung gegebenenfalls getrocknet und/oder gemahlen wird.

8. Verfahren zur Herstellung einer Schwarzpigment-Hilfsmittel-Kombination gemäß Anspruch 7, **dadurch gekennzeichnet, dass** ein oder mehrere anorganische Schwarzpigmente in Suspension oder Paste mit ein oder mehreren organischen Hilfsmitteln gemischt, getrocknet und gegebenenfalls gemahlen werden.

9. Verfahren zur Herstellung einer Schwarzpigment-Hilfsmittel-Kombination gemäß Anspruch 8, **dadurch gekennzeichnet, dass** die Pigmentsuspension eine Suspension oder Paste aus dem Pigmentherstellungsprozeß ist.

10. Verfahren zur Herstellung einer Schwarzpigment-Hilfsmittel-Kombination gemäß Anspruch 8, **dadurch gekennzeichnet, dass** die Pigmentsuspension eine erneute Dispersion von agglomerierten Partikeln ist.

11. Verfahren zur Herstellung einer Schwarzpigment-Hilfsmittel-Kombination gemäß einem oder mehreren der Ansprüche 8 bis 10, **dadurch gekennzeichnet, dass** die Trocknung durch Sprühtrocknung oder Wirbelschichttrocknung erfolgt.

12. Verfahren zur Herstellung einer Schwarzpigment-Hilfsmittel-Kombination gemäß Anspruch 7 oder 8, **dadurch gekennzeichnet, dass** die Schwarzpigment-Hilfsmittel-Kombination in trockenem und gegebenenfalls gemahlenem Zustand anschließend noch einem Granulationsprozeß unterworfen wird.

13. Verwendung der Schwarzpigment-Hilfsmittel-Kombination gemäß einem oder mehreren der Ansprüche 1 bis 6 oder der nach dem Verfahren gemäß der Ansprüche 7 bis 12 hergestellten Schwarzpigment-Hilfsmittel-Kombination zur Einfärbung von kalk- und/oder zementgebundenen Baustoffen, wie vorzugsweise Beton, Zementmörtel, Putz und Kalksandstein oder auch zum Einfärben von Asphalt.

14. Verfahren zur Einfärbung von Baustoffen mit einer Schwarzpigment-Hilfsmittel-Kombination gemäß einem oder mehreren der Ansprüche 1 bis 6, **dadurch gekennzeichnet, dass** die Schwarzpigment-Hilfsmittel-Kombination mit den Baustoffen in einer Menge von 0,1 bis 10 Gew.-%, bezogen auf Zement, oder bei Asphalt bezogen auf das gesamte Mischgut, vermischt werden.

15. Verfahren zur Einfärbung von Baustoffen mit einer Schwarzpigment-Hilfsmittel-Kombination gemäß Anspruch 14, **dadurch gekennzeichnet, dass** die Schwarzpigment-Hilfsmittel-Kombination erst in Wasser suspendiert wird und anschließend mit den Baustoffen vermischt wird.


**Claims**

1. Black pigment/auxiliary combination consisting essentially of one or more inorganic black pigments from the group consisting of iron oxide black, iron-manganese mixed oxide and spinel mixed-phase pigments and one or more organic auxiliaries, the black pigment/auxiliary combination having a relative colour strength of $\geq 110\%$, in particular $\geq 112\%$, based on the black pigment used, according to the building material colour test, **characterized in that** organic auxiliaries from the group consisting of partly or completely hydrolysed polyvinyl alcohols, polyvinyl acetates or copolymers of vinyl acetate, alkyl sulphates, alkyl sulphonates, alkyl phosphates and alkyl phosphonates in the form of their alkali metal salts or mixtures thereof are used.

2. Black pigment/auxiliary combination according to Claim 1, **characterized in that** the organic auxiliaries are added in an amount of 0.01% by weight to 20% by weight, in particular of 0.1% by weight to 5% by weight, calculated in each case as active substance based on the inorganic black pigment(s).

3. Black pigment/auxiliary combination according to one or more of Claims 1 to 2, **characterized in that** the black pigment/auxiliary combination has a residual water content of less than 5% by weight, in particular less than 3% by weight.

4. Black pigment/auxiliary combination according to one or more of Claims 1 to 3, **characterized in that** the black pigment/auxiliary combination is present in granular form.

5. Black pigment/auxiliary combination according to Claim 4, **characterized in that** the black pigment/auxiliary combination is present in the form of bead granules.

6. Black pigment/auxiliary combination according to Claim 4 or 5, **characterized in that** at least 85% of the granulated black pigment/auxiliary combination has a particle size between 60 $\mu$m and 3000 $\mu$m, in particular between 80 $\mu$m and 1500 $\mu$m.

7. Process for the preparation of a black pigment/auxiliary combination according to one or more of Claims 1 to 6, **characterized in that** one or more inorganic black pigments are mixed with one or more organic auxiliaries and the mixture is optionally dried and/or milled.

8. Process for the preparation of a black pigment/auxiliary combination according to Claim 7, **characterized in that** one or more inorganic black pigments in suspension or paste are mixed with one or more organic auxiliaries, dried and optionally milled.

9. Process for the preparation of a black pigment/auxiliary combination according to Claim 8, **characterized in that** the pigment suspension is a suspension or paste from the pigment preparation process.

10. Process for the preparation of a black pigment/auxiliary combination according to Claim 8, **characterized in that** the pigment suspension is a redispersion of agglomerated particles.

11. Process for the preparation of a black pigment/auxiliary combination according to one or more of Claims 8 to 10, **characterized in that** the drying is effected by spray drying or fluidized-bed drying.

12. Process for the preparation of a black pigment/auxiliary combination according to Claim 7 or 8, **characterized in that** the black pigment/auxiliary combination in the dry and optionally milled state is subsequently also subjected to a granulation process.

13. Use of the black pigment/auxiliary combination according to one or more of Claims 1 to 6 or of the black pigment/auxiliary combination prepared by the process according to Claims 7 to 12 for colouring lime- and/or cement-bound building materials, such as, preferably, concrete, cement mortar, render and lime-sand brick or for colouring asphalt.

14. Process for colouring building materials with a black pigment/auxiliary combination according to one or more of Claims 1 to 6, **characterized in that** the black pigment/auxiliary combination is mixed with the building materials in an amount of 0.1 to 10% by weight, based on cement or, in the case of asphalt, based on the total mixed material.

15. Process for colouring building materials with a black pigment/auxiliary combination according to Claim 14, **characterized in that** the black pigment/auxiliary combination is first suspended in water and then mixed with the building materials.

**Revendications**

1. Combinaison pigment noir-adjuvant essentiellement constituée par un ou plusieurs pigments noirs inorganiques du groupe constitué par les pigments noirs d'oxyde de fer, d'oxydes mixtes de fer et de manganèse ou à phase mixte spinelle, et un ou plusieurs adjuvants organiques, la combinaison pigment noir-adjuvant présentant un pouvoir colorant relatif ≥ 110 %, notamment ≥ 112 %, par rapport au pigment noir utilisé, selon le test de couleur des matériaux de construction, **caractérisée en ce que** des adjuvants organiques du groupe constitué par les alcools polyvinyliques partiellement ou entièrement hydrolysés, les polyacétates de vinyle ou les copolymères avec de l'acétate de vinyle, des sulfates, sulfonates, phosphates et phosphonates d'alkyle sous la forme de leurs sels de métaux alcalins, ou leurs mélanges, sont utilisés.

2. Combinaison pigment noir-adjuvant selon la revendication 1, **caractérisée en ce que** les adjuvants organiques sont ajoutés en une quantité de 0,01 % en poids à 20 % en poids, notamment de 0,1 % en poids à 5 % en poids, calculée à chaque fois en tant qu'agent actif par rapport à ou aux pigments noirs inorganiques.

3. Combinaison pigment noir-adjuvant selon une ou plusieurs des revendications 1 à 2, **caractérisée en ce que** la combinaison pigment noir-adjuvant présente une teneur en eau résiduelle de moins de 5 % en poids, notamment de moins de 3 % en poids.

4. Combinaison pigment noir-adjuvant selon une ou plusieurs des revendications 1 à 3, **caractérisée en ce que** la combinaison pigment noir-adjuvant se présente sous la forme d'un granulé.

5. Combinaison pigment noir-adjuvant selon la revendication 4, **caractérisée en ce que** la combinaison pigment noir-adjuvant se présente sous la forme d'un granulé perlé.

6. Combinaison pigment noir-adjuvant selon la revendication 4 ou 5, **caractérisée en ce qu'**au moins 85 % de la combinaison pigment noir-adjuvant granulée présente une taille de particule comprise entre 60 μm et 3 000 μm, notamment entre 80 μm et 1 500 μm.

7. Procédé de fabrication d'une combinaison pigment noir-adjuvant selon une ou plusieurs des revendications 1 à 6, **caractérisé en ce qu'**un ou plusieurs pigments noirs inorganiques sont mélangés avec un ou plusieurs adjuvants organiques et le mélange est éventuellement séché et/ou broyé.

8. Procédé de fabrication d'une combinaison pigment noir-adjuvant selon la revendication 7, **caractérisé en ce qu'**un ou plusieurs pigments noirs inorganiques en suspension ou en pâte sont mélangés avec un ou plusieurs adjuvants organiques, séchés et éventuellement broyés.

9. Procédé de fabrication d'une combinaison pigment noir-adjuvant selon la revendication 8, **caractérisé en ce que** la suspension de pigment est une suspension ou une pâte issue du procédé de fabrication du pigment.

10. Procédé de fabrication d'une combinaison pigment noir-adjuvant selon la revendication 8, **caractérisé en ce que** la suspension de pigment est une nouvelle dispersion de particules agglomérées.

11. Procédé de fabrication d'une combinaison pigment noir-adjuvant selon une ou plusieurs des revendications 8 à 10, **caractérisé en ce que** le séchage a lieu par séchage par pulvérisation ou séchage en lit fluidisé.

**12.** Procédé de fabrication d'une combinaison pigment noir-adjuvant selon la revendication 7 ou 8, **caractérisé en ce que** la combinaison pigment noir-adjuvant à l'état séché et éventuellement broyé est ensuite encore soumise à un procédé de granulation.

**13.** Utilisation de la combinaison pigment noir-adjuvant selon une ou plusieurs des revendications 1 à 6 ou de la combinaison pigment noir-adjuvant fabriquée par le procédé selon les revendications 7 à 12 pour la coloration de matériaux de construction liés par de la chaux et/ou du ciment, tels que de préférence du béton, du mortier de ciment, du crépi et des briques silico-calcaires ou également pour la coloration d'asphalte.

**14.** Procédé de coloration de matériaux de construction avec une combinaison pigment noir-adjuvant selon une ou plusieurs des revendications 1 à 6, **caractérisé en ce que** la combinaison pigment noir-adjuvant est mélangée avec les matériaux de construction en une quantité de 0,1 à 10 % en poids, par rapport au ciment, ou en cas d'asphalte par rapport au produit mélangé total.

**15.** Procédé de coloration de matériaux de construction avec une combinaison pigment noir-adjuvant selon la revendication 14, **caractérisé en ce que** la combinaison pigment noir-adjuvant est tout d'abord suspendue dans de l'eau, puis mélangée avec les matériaux de construction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0396885 B1
- EP 0249843 B1
- DE 3512124 A1
- DE 3632913 A1
- EP 0634991 B1
- US 5401313 A1
- DE 3619363 A1
- WO 0174735 A1
- US 6758893 B2
- US 5853476 A1
- EP 1027302 B1
- DE 19811553 A1
- DE 19548418 A1
- EP 1293543 A
- EP 0860476 A2

**In der Beschreibung aufgeführte Nicht-Patentliteratur**

- Ullmann's Encyclopedia of Industrial Chemistry. VCH Verlagsesellschaft mbH, 1996, vol. A20, 297
- Ullmann's Encyclopedia of Industrial Chemistry. VCH Verlagsgesellschaft mbH, 1996, vol. A20, 309 f